# EUROPEAN PATENT SPECIFICATION

(11) **EP 3 057 816 B1**
(45) Date of publication and mention of the grant of the patent: **17.06.2020**
(21) Application number: 14854457.0
(22) Date of filing: 10.10.2014
(51) Int. Cl.: B60J 11/06, B60J 11/00, B62D 25/00, B60R 13/04

(54) **OFF-ROAD VEHICLE PROTECTIVE PLATES**
GELÄNDEFAHRZEUG-SCHUTZPLATTEN
PLAQUES PROTECTRICES DE VÉHICULE TOUT-TERRAIN

(30) Priority: 16.10.2013 AU 2013903981
(43) Date of publication of application: 24.08.2016
(73) Proprietor: Rhino Hide Pty. Ltd., Subiaco, Western Australia 6008 (AU)
(72) Inventor: BERRYMAN, Marc John, Wembley Downs Western Australia 6019 (AU)
(74) Representative: FRKelly
(86) International application number: PCT/AU2014/000966
(87) International publication number: WO 2015/054723

(56) References cited:
- WO-A1-2009/050782
- AU-A1- 2004 203 542
- JP-A- H0 930 463
- JP-A- 2013 166 537
- US-A- 4 531 560
- US-A- 4 531 560
- US-A- 4 849 272
- US-A- 5 919 541
- US-A- 5 931 522
- US-A- 5 984 401
- US-A1- 2010 007 169
- US-A1- 2010 007 169
- US-A1- 2011 226 394
- US-B1- 7 828 363
- US-B1- 7 828 363

## Description

### Technical Field

The present invention generally relates to protective panels for an off-road vehicle.

### Background Art

Off road vehicles such as 4WD's are often expensive and have high quality paint jobs. The high quality paint jobs are desirable so that the 4WD can drive in an urban setting and blend in with other vehicles. These high quality paint jobs are susceptible to being damaged if the 4WD is driven in an off-road environment. It is common for 4WD's to be driven in the off-road environment.

In an off-road environment, the 4WD is likely to encounter impacts all over the surface of its outer body from rocks, animals, trees, embankments and other commonly encountered off-road obstacles.

It is desirable for a 4WD to be driven in both the off-road environment and in the urban environment without becoming an eyesore in the urban setting.

Protective covers for the body panels of a car in the urban environment are known. These protective covers are used when the car is parked in an urban setting with the associated infrastructure.

These conventional covers are attached to the car when the car is parked. They protect the vehicle from light scratching encountered, for example, from falling twigs, other vehicle doors, shopping trolleys, vandals and other common urban infrastructure based light impacts.

Some of these conventional covers can remain on the vehicle body panels when the vehicle is moved, but only when the vehicle is moved over relatively smooth surfaces, such as a road. Closest prior art document US 4849272 discloses a flexible protection vinyl sheet to be applied with magnets on the surface of a vehicle.

Common forms of the conventional covers can be raised strips placed along the length of door panels. These are designed to divert scratching away from commonly scratched locations, such as at door handle height.

Another common form of vehicle protection is known as a car bra/ auto bra that uses a protective strip of material or paint to stop chipping of the paint in commonly chipped areas.

These conventional covers for body panels are not designed to protect vehicle panels all over their accessible surface or from all angles, only from angles commonly needing protection in the urban or sealed road driving environment.

There are other paint layer products available that are designed to protect the vehicle panels from damage through the paint layers absorbing impacts from foreign objects. These layers incorporate plastics such as polyurethane.

These paint layers are only designed to protect against commonly encountered urban impacts (such as at the lower front of a car) and are not suited for off-road protection.

These conventional covers are not suitable for protecting 4WD body panels all over their surfaces when they are driven off-road and encounter impacts from sources uncommon in the typical urban setting.

The preceding discussion of the background art is intended to facilitate an understanding of the present invention only. The discussion is not an acknowledgement or admission that any of the material referred to is or was part of the common general knowledge as at the priority date of the application.

### Summary of Invention

It is an object of this invention to ameliorate, mitigate or overcome, at least one disadvantage of the prior art, or which will at least provide the public with a practical choice.

The present invention is in the form of a protection system for protecting at least an external body panel of a vehicle, the system comprises at least one hard protective plate which is adapted to be releasably secured to the vehicle to protect the external body panel, an inner surface of the at least one hard protective plate conforms to the external body panel of the vehicle it is adapted to cover so that the hard protective plate abuts and is of the same shape as the body panel, the shape of the protective plate being such that it is arranged to receive the body panel, the at least one hard protective plate is releasably secured to the vehicle using at least one magnet.

Preferably, the vehicle is an off-road vehicle.

Preferably, the vehicle is a 4WD.

Preferably the external portion of the vehicle is a body panel of the vehicle.

Preferably the at least one hard protective plate has an outer surface which is exposed to the environment once fitted to a vehicle and an inner surface which lies adjacent the vehicles external portion.

Preferably an inwardly projecting plate edge extends along at least one edge of the at least one hard protective plate.

The plate edge may extend transverse to the inner surface of the protective plate in a direction away from the outer surface.

Preferably one of the at least one hard protective plates is selected from one of the following:
body panels;
a front quarter body panel;
a rear quarter body panel;
a front door panel;
a rear door panel;
a bonnet panel; and
a rear panel.

Preferably, at least a portion of the inner surface of the protective plate is coated with a soft material.

In accordance with a further embodiment, the present invention provides a vehicle body panel hard protective plate wherein the hard protective plate is adapted to engage a vehicle body panel and is shaped to conform exactly to the vehicle body panel so that the hard protective plate abuts and is of the same shape as the body panel, the shape of the protective plate being such that it is arranged to receive the body panel;
wherein the hard protective plate includes a magnet to releasably secure the hard protective plate to the body panel; and
wherein the hard protective plate is adapted to remain fixed to the body panel when the vehicle is driven in an off-road environment.

Preferably, the vehicle is designed to be driven on road and off-road.

By covering the entire panel of a vehicle body panel, the panel is protected from damage incurred from a plurality of angles when driving a vehicle off road. The magnetic fixing of the plate in a plurality of locations strengthens the attachment of the plate.

Preferably the vehicle body panel hard protective plate is removable from the body panel of a vehicle.

In being removable, the plate can be fitted and removed as needed for urban and off-road use.

Preferably, a plurality of magnets are used to fix the protective plate to the body panel.

Using magnets makes repeated removal and fitting a simple easily executed process.

Preferably, the magnets are fixed to the hard protective plate.

Fixing the magnets to the hard protective plate means that the hard protective plate can be made from a variety of different materials and still be supported by the magnets.

Preferably, the magnets are removably fixed to the hard protective plate.

This allows the magnets to be transferred to different panels or for different uses and to be replaced if necessary.

Preferably, the hard protective plate includes a recess on its internal surface shaped to receive a magnet.

Preferably the magnet is adapted to sit between the internal surface of the plate and the external surface of the vehicle body panel.

In one aspect of the invention, the hard protective plate is shaped and contoured in the same manner as the body panel to which it is to be attached.

This creates different protective plates for different vehicle body panels.

In another aspect of the invention, the hard protective plate conforms to the shape of the outer surface of the body panel of a vehicle.

Preferably, the hard protective plate is made of thermoformed plastic.

This makes the hard protective plate cheap and easy to make.

Preferably the thermoformed plastic is acrylonitrile butadiene styrene (ABS).

ABS is readily available and used. ABS's hard properties make it well suited for the present use.

Preferably, the magnet is a neodymium magnet.

A strong magnet, such as a neodymium magnet is used so that the hard protective plate does not become removed in the bumpy off-road environment.

Preferably, the magnet is coated with a soft material.

Coating the magnet with a soft material stops it from scratching the 4WD body panels that the hard protective plate is protecting.

Preferably, the soft material is silicone.

Preferably, the soft material is a rubberized material.

Preferably, the soft material is neoprene.

Preferably, the hard protective plate includes a plate edge, wherein the plate edge protrudes transverse to the surface of the hard protective plate.

Preferably the protrusion from the hard protective plate is in a labrum arrangement.

Preferably, the hard protective plate includes a plurality of plate edges.

Preferably, when the hard protective plate is engaged with the 4WD body panel, the plate edge is adapted to extend past the outer surface of the 4WD body panel inwardly.

Preferably, the plate edge engages and conforms to a 4WD body panel edge.

By having the plate edge of the hard protective plate extend past the outer surface of the 4WD body panel, the edges of the hard protective plate are inside the outer surface of the 4WD. This removes the risk of branches or other obstructions connecting with the edges of the plate as they scrape past the plate and pulling the plate off by catching an edge of the plate. It also aids the hard protective plates to stay in position on the 4WD body panels as the edges help the hard protective plate grip the 4WD body panel.

Preferably the hard protective plate includes a wheel arch edge that is adapted to abut the wheel arch of a 4WD.

Preferably the wheel arch edge extends further than the plate edge in the direction transverse to the surface of the hard protective plate.

In yet another aspect of the invention, there is provided an arrangement of 4WD body panel hard protective plates, wherein the arrangement of 4WD body panel hard protective plates are attached to all 4WD body panels.

In yet another aspect of the present invention, there is provided an arrangement of 4WD body panel protective plates, wherein the arrangement of 4WD body panel hard protective plates are attached to all 4WD body panels except the roof.

In yet a further embodiment of the present invention, there is provided a method of protecting the surface of 4WD body panels when being driven in an off-road environment, including attaching a 4WD body panel hard protective plate against a corresponding 4WD body panel, so that an inner surface of the hard protective plate abuts against and conforms to an outer surface of the 4WD body panel so that the hard protective plate abuts and is of the same shape as the body panel, the shape of the protective plate being such that it is arranged to receive the body panel and so that the entire outer surface of the 4WD body panel is covered by the hard protective plate to form an outer surface of the 4WD.

Preferably, when the hard protective plate is placed against the corresponding 4WD body panel, the plate edge extends past the outer surface of the 4WD body panel, into the 4WD.

Preferably, the end of the plate edge is not exposed to the outer surface of the 4WD.

The present invention is in the form of a protection system for protecting at least an external portion of a vehicle, the system comprises at least one protective panel, the at least one protective panel comprising a first protective surface adapted to be releasably secured to the external portion by at least one magnet.

In one aspect of the invention the first protective surface is adjacent the vehicle's external portion when releasably secured thereto.

In another aspect of the invention the first protective surface is spaced from the vehicle's external portion when releasably secured thereto.

In yet a further embodiment of the present invention, there is provided a protection system for protecting at least an external body panel of a vehicle, the system comprising:
placing at least one hard protective plate, which is adapted to be releasably secured to the at least an external body panel of a vehicle to protect the external body panel, against the at least an external body panel of the vehicle;
wherein the protective plate includes a plate edge arranged to extend inwardly towards the vehicle;
wherein an inner surface of the at least one hard protective plate conforms to the external body panel of the vehicle it is adapted to be secured to so that the hard protective plate abuts and is of the same shape as the body panel, the plate edge and the inner surface being arranged to receive the body panel; and
wherein the at least one hard protective plate is releasably secured to the vehicle using at least one magnet.

In yet a further embodiment of the present invention, there is provided a protection system for protecting at least an external body panel of a vehicle, the system comprising:
placing at least one hard protective plate, which is adapted to be releasably secured to the at least an external body panel of a vehicle to protect the external body panel, against the at least an external body panel of the vehicle;
wherein the protective plate includes a plate edge arranged to extend inwardly towards the vehicle;
wherein an inner surface of the at least one hard protective plate conforms to the external body panel of the vehicle it is adapted to be secured to so that the hard protective plate abuts and is of the same shape as the body panel, the plate edge and the inner surface being arranged to receive the body panel;
wherein the at least one hard protective plate is releasably secured to the vehicle using at least one magnet; and
wherein the magnet is arranged to sit within a recess of the inner surface.

Preferably, the inner surface includes a soft inner lining adapted to stop the external of the body panel scratching.

In yet a further embodiment of the present invention, there is provided a hard protective plate adapted to engage a vehicle body panel;
wherein an inner surface of the hard protective plate is shaped to conform exactly to the vehicle body panel so that the hard protective plate abuts and is of the same shape as the vehicle body panel, the shape of the hard protective plate being such that the inner surface is arranged to receive the vehicle body panel so that the entire vehicle body panel is covered by the hard protective plate;
wherein the hard protective plate includes a magnet to releasably secure the hard protective plate to the vehicle body panel;
wherein the hard protective plate is adapted to remain fixed to the vehicle body panel when the vehicle is driven in an off-road environment;
wherein the magnet is arranged to sit within a recess of the inner surface; and
wherein the recess is shaped to match the profile of the magnet.

### Brief Description of the Drawings

Further features of the present invention are more fully described in the following description of several non-limiting embodiments thereof. This description is included solely for the purposes of exemplifying the present invention. It should not be understood as a restriction on the broad summary, disclosure or description of the invention as set out above. The description will be made with reference to the accompanying drawings in which:
Figure 1 is a perspective view of a 4WD body protection plate according to an embodiment of the present invention;
Figure 2 is a side view of a front quarter panel 4WD body protection plate in accordance with an embodiment of the present invention;
Figure 3 is an isomeric view of the protection plate of Figure 2;
Figure 4 is a reverse isomeric view of the protection plate of Figure 2;
Figure 5 is a side view of a front door panel 4WD body protection plate in accordance with an embodiment of the present invention;
Figure 6 is an isomeric view of the protection plate of Figure 5;
Figure 7 is a reverse isomeric view of the protection plate of Figure 5;
Figure 8 is a side view of a rear door panel 4WD body protection plate in accordance with an embodiment of the present invention;
Figure 9 is an isomeric view of the protection plate of Figure 8;
Figure 10 is a reverse isomeric view of the protection plate of Figure 8;
Figure 11 is a side view of a rear quarter panel 4WD body protection plate in accordance with an embodiment of the present invention;
Figure 12 is an isomeric view of the protection plate of Figure 11;
Figure 13 is a reverse isomeric view of the protection plate of Figure 11; and
Figure 14 is a partial cross sectional view of the protection plate of Figure 2 attached to a 4WD body panel.

In the drawings, like structures are referred to by like numerals throughout the several views. The drawings shown are not necessarily to scale, with emphasis instead generally being placed upon illustrating the principles of the present invention.

### Description of Embodiments

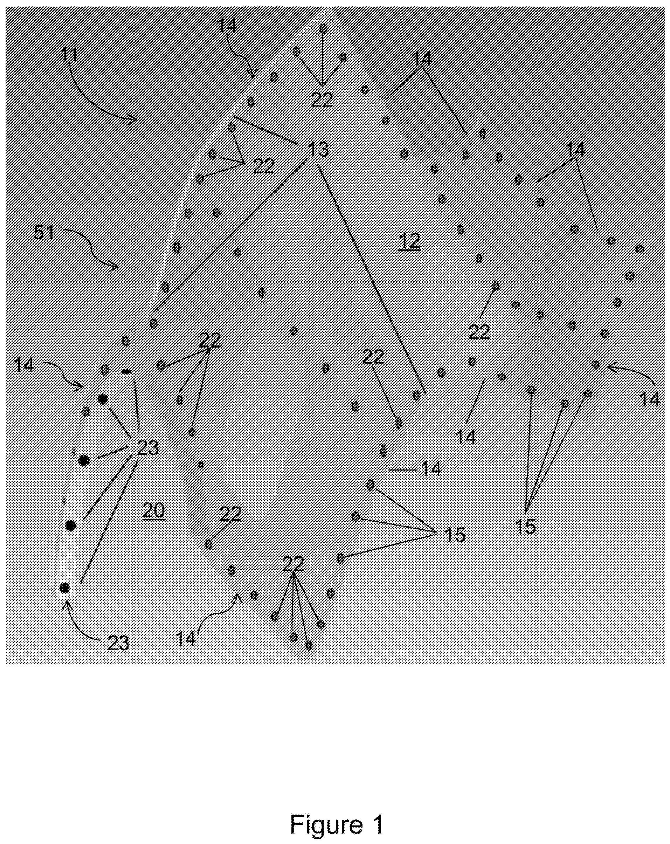

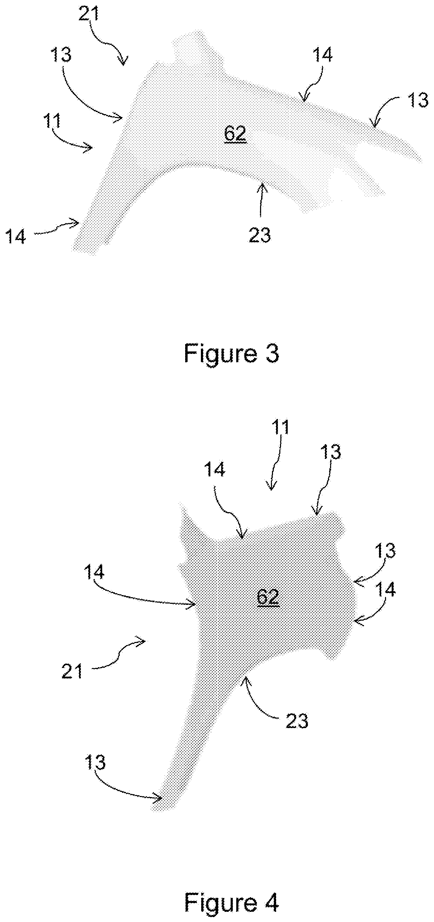

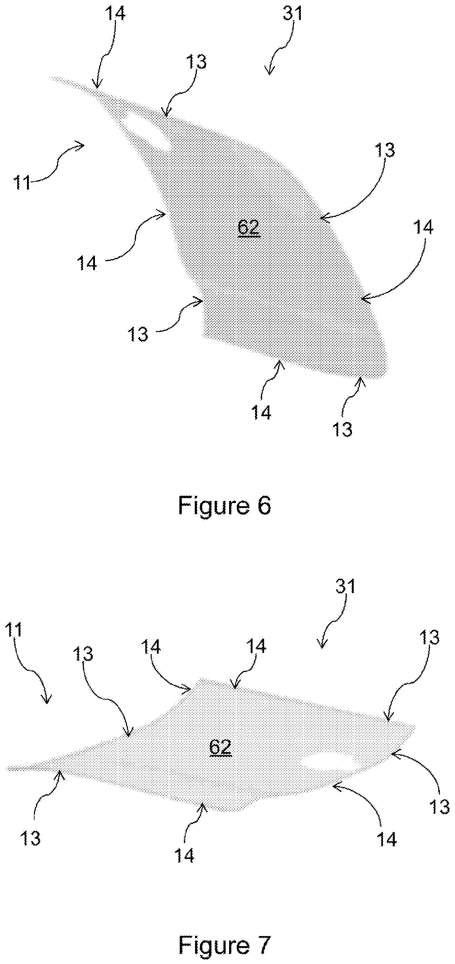

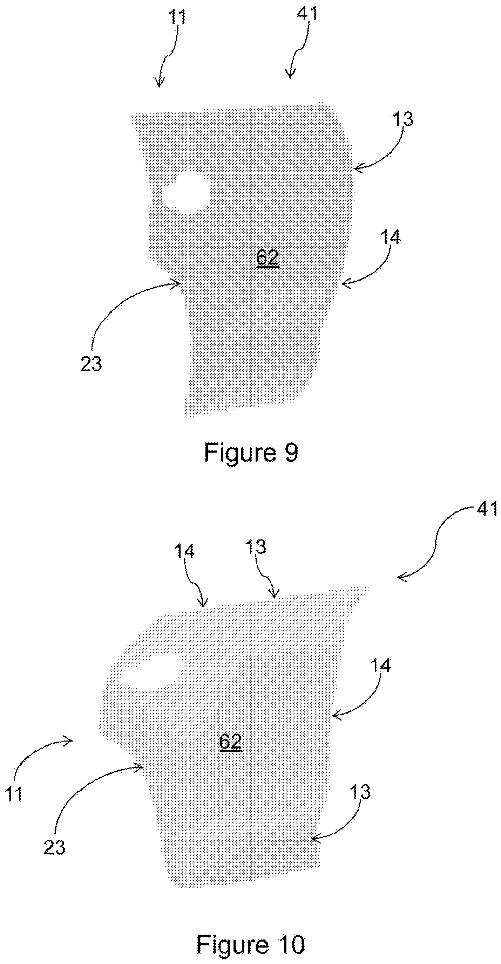

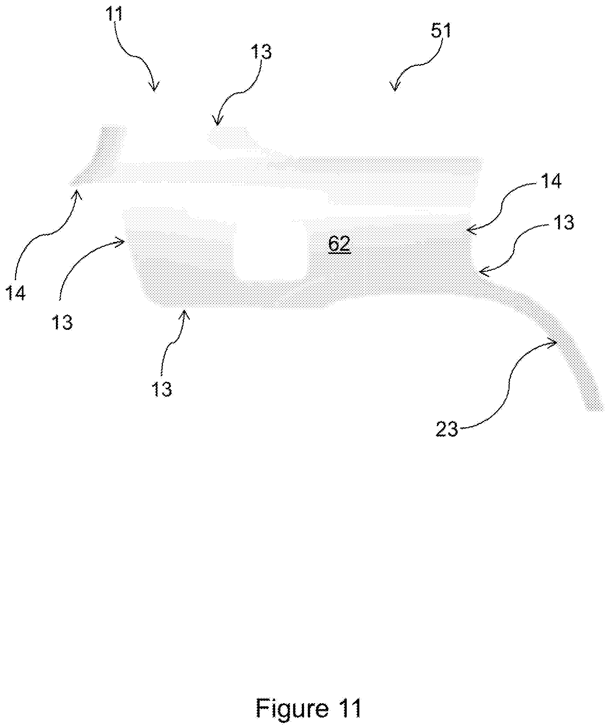

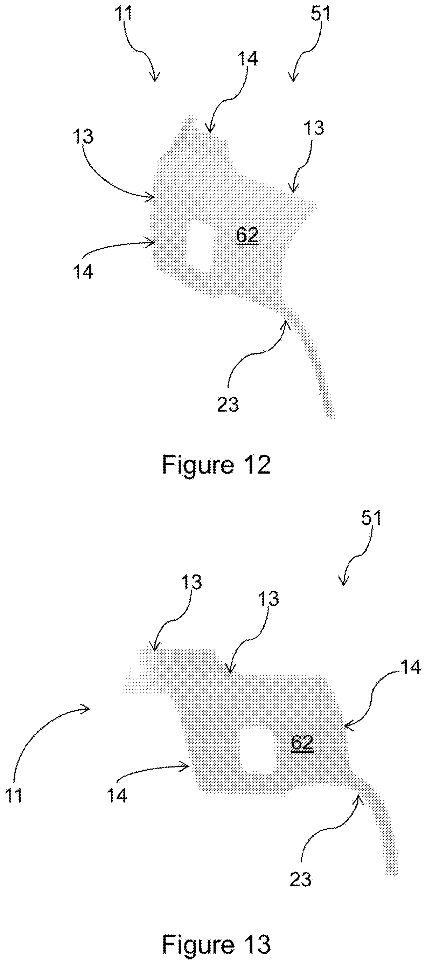

Referring to Figures 1 to 14 generally, the present invention according to an embodiment is in the form of a 4WD body panel protective plate 11. The protective plate 11 is shaped so that its inner surface 12 is of a size, shape and profile to conform to the outer surface of a corresponding 4WD body panel 25 so that the entire body panel is covered by the protective plate 11.

The protective plate 11 deflects and absorbs impacts that are encountered when a 4WD is driven. In a specific embodiment, the protective plate 11 deflects and absorbs impacts, when a 4WD is driven in the off-road environment, from the 4WD body panels 25 with its outer surface 62. As the protective plate 11 covers the entire body panel of the 4WD to which it attaches, impacts from all angles and in all positions are deflected and/or absorbed by the protective plate 11 with its outer surface 62.

The protective plates 11 include plate edges 14 that are positioned to abut the edges of the corresponding 4WD door panel 25 when the plate 11 is engaged with and against the corresponding panel. The plate edges 14 extend as a protrusion 13, transverse to the inner surface 12 of the plate 11 in the direction of the plate 11's engagement with the 4WD body panel 25. The protrusion 13 takes the form of a labrum. The protrusion 13 extends past the outer surface of the 4WD body panel to which it is attached.

When a 4WD body panel protective plate 11 is placed on a 4WD body panel 25, the protrusions 13 extend under and past the edge 26 of the corresponding 4WD body panel 25. Where the edge 26 of the 4WD body panel 25 is adjacent another 4WD body panel 25, the protrusion 13 extends into the gap (not shown) between the two 4WD body panels 25. This places the plate edges 14 of the 4WD body panel protective plate 11 away from the outer surface of the 4WD body 25. Therefore, as the 4WD drives amongst trees, embankments, sand dunes, etc. the edges are not exposed to be caught on passing materials, only the outer surface 62 is exposed in this manner.

Where the 4WD body panel protective plates 11 is a rear quarter protective plate 51, or a front quarter protective plate 21, a wheel arch 20 is covered. To allow the edges of the front quarter protective plate 21 and the rear quarter protective plate 51 to avoid being caught on passing material around the wheel arch, wheel arch edge 23 is included. Wheel arch edge 23 extends further than protrusion 13 in the direction of engagement with the 4WD body panels 25 to ensure that the wheel arch edge 23 is covered. This stops wheel arch edge 23 from being caught on passing debris.

To assist in holding the protective plates 11 in place on the corresponding body panels during rough rides associated with off-road 4WDing, the protective plates 11 use magnets 15. Magnets 15 are placed in a plurality of positions over the inner surface of the protective plate 11, so that the protective plate 11 includes magnets 15 in different locations and importantly so that magnets 15 are evenly placed around the plate edges 14. The extensive use of magnets 15 proximate the plate edges 14 of the protective panel 11 ensures that the plate edges 14 are evenly held down against the 4WD body panel 25 and not susceptible to being caught on passing materials.

In a varied embodiment of the present invention, the magnets 15 take the form of strips that are arranged around the inner surface 12 of the protective plate 11.

In a further varied embodiment of the present invention, the magnet 15 covers all of, or the majority of the inner surface 12 of the protective plate 11.

To ensure that the protective plates 11 remain in position whilst driving over rough terrain, the magnets 15 are neodymium magnets. Neodymium magnets are used for their strong permanent magnet properties.

The use of magnets and plate edges 14 allows the protective plates 11 to be easily placed on and removed from the 4WD body panel 25. This is described further below.

In varied embodiments of the present invention, the magnets 15 are iron nitride, other rare earth magnets or alternative strong magnets as understood by the skilled addressee.

To avoid the protective plate 11, or the magnets 15 damaging the surface of the 4WD body panels 25 due to movement and friction between the two surfaces when passing over rough terrain, the magnets 15 are coated with a silicon material. This provides a soft interface between the magnets 15, protective plate 11 and the 4WD body panel 25.

In a varied embodiment of the present invention, the magnets 15 are rubberized to avoid damaging the 4WD body panels 25.

The inner surface 12 includes recesses 22. Recesses 22 are of the same profile as the magnets 15 that are placed within them. This allows the inner surface 12 of the protective plate 11 to abut the 4WD body panel.

The magnets 15 are fixed within the recesses permanently. This is achieved with an adhesive, through the profile of the magnets and recess or otherwise as would be understood by the skilled addressee.

Alternatively the magnets 15 are removable engaged with the recesses 22. This is achieved through the use of clips, pins or otherwise as understood by the skilled addressee.

Where the magnets 15 are removably engaged with the recesses 22, the magnets 15 can be removed and repositioned as desired.

The protective plate 11 is formed of Acrylonitrile butadiene styrene (ABS) plastic so that it is light, cheap and easy to use. The protective plate can be formed using thermoforming, injection moulding, gas assisted moulding, blow moulding, rotation moulding, compression moulding or spin casting.

In a different embodiment of the present invention, the protective plate 11 is formed of Polylactic acid (PLA) plastic, Polyvinyl acetate (PVA) plastic.

In a varied embodiment of the present invention, the protective plate 11 can be made from composite materials, aluminium or other materials that are sufficiently strong and hard to protect the 4WD body panels 25 without adding significant amounts of weight to the 4WD as understood by the skilled addressee.

Referring to Figures 1, 11, 12 and 13, an embodiment of the protective plate 11 of the present invention is a rear quarter protective plate 51. The rear quarter protective plate 51 includes wheel arch edge 23 that hugs a rear wheel arch of a 4WD. It also includes plate edges 14 that hug the rear quarter body panel edges of a 4WD.

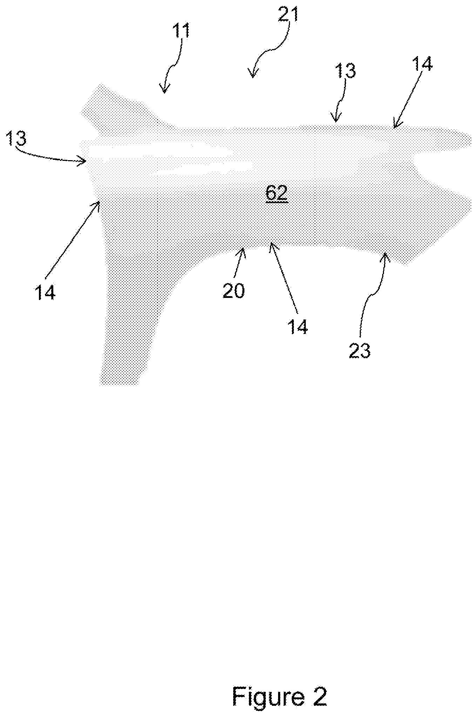

Referring to Figures 2, 3 and 4 an embodiment of the protective plate 11 of the present invention is a front quarter protective plate 21. The front quarter protective plate 21 includes wheel arch edge 23 that hugs a front wheel arch of a 4WD. It also includes plate edges 14 that hug the front quarter body panel edges of a 4WD.

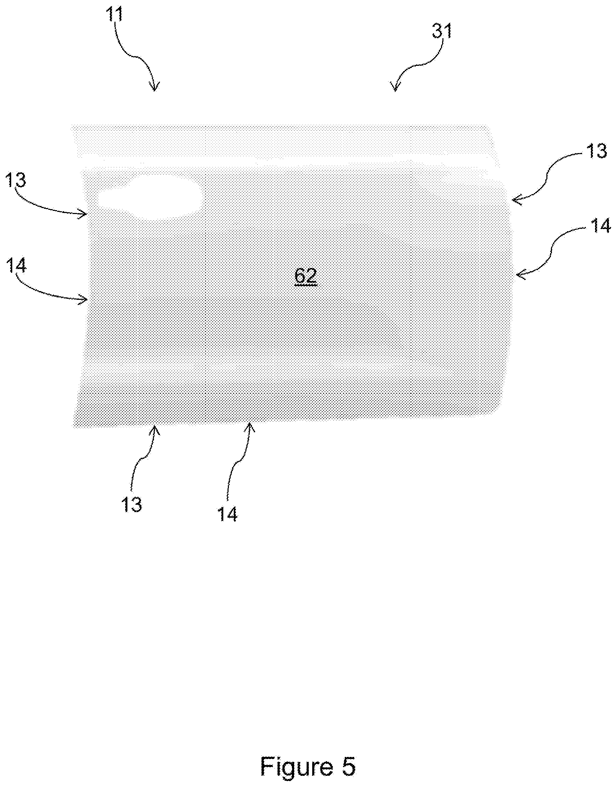

Referring to Figures 5, 6 and 7 an embodiment of the protective plate 11 of the present invention is a front door protective plate 31. The front door protective plate 31 includes plate edges 14 with protrusions 13 that hug the rear front door panel edges of a 4WD.

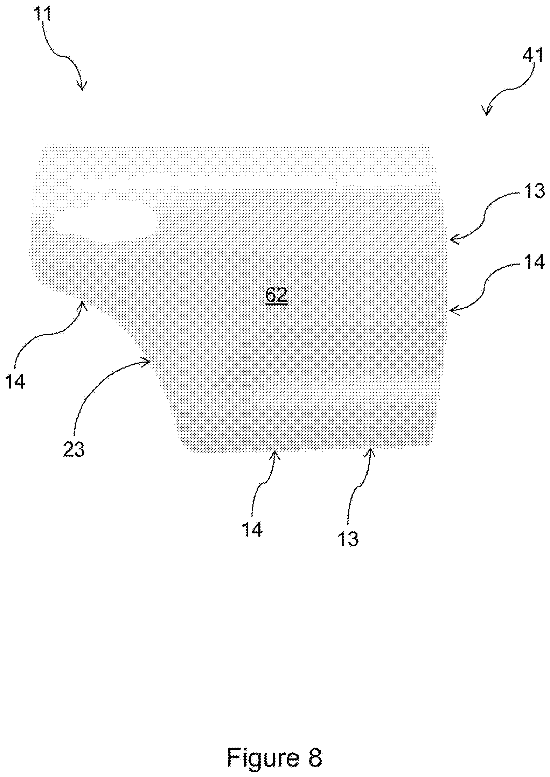

Referring to Figures 8, 9 and 10 an embodiment of the protective plate 11 of the present invention is a rear door protective plate 41. The rear door protective plate 41 includes plate edges 14 with protrusions 13 that hug the rear front door panel edges of a 4WD.

It is within the scope of the present invention to provide a bonnet protective plate 11 (not shown) and a rear panel protective plate (not shown).

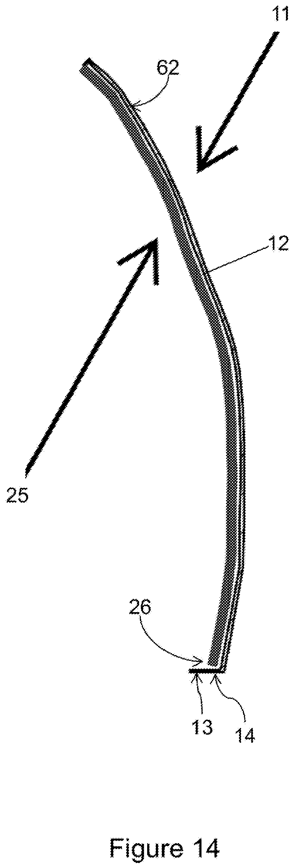

Referring to Figure 14, the protective plate 11, abuts the 4WD body panel 25. The protective plate 11 protects the 4WD body panel 25 from impacts and scratching.

It is within the scope of the present invention for the protective plates 11 to be used with a 2WD on road vehicle. It is also within the scope of the present invention for the protective plates to be used on a purely off-road vehicle.

The workings of the protective plate 11 according to the present invention will be further described in a specific example. The example is not exhaustive and is not to be taken as limiting the present invention to the example only.

### Example

A collection of protective plates 11, including rear and front quarter protective plates 51, 21, front and rear door protective plates 41, 31 are transported on sealed roads to a 4WD off-road track entrance.

Prior to traveling over an off-road track, the protective plates 11 are positioned over corresponding 4WD body panels so that the inner surface 12 of the protective plate abuts outer surface of the corresponding 4WD body panel 25. The protruding edge 13 is positioned so that it abuts a corresponding edge 26 of 4WD body panel 25. With the inner surface 12 abutting 4WD body panel 25, the magnets 22 become magnetically fixed to the 4WD body panel 25.

The magnetic fixing of the protective plate 11 to a corresponding 4WD body panel 25 strongly fixes the protective plate in place. The magnetic fixing stops the protective plates 11 from falling off the 4WD body panel 25.

Alternatively the protective plates 11 can be attached prior to the 4WD traveling over sealed roads to an off-road 4WD track entrance.

The skilled addressee would understand that different models of 4WD have different profiled body panels to differentiate models from each other. In addition to providing different protective plates 11 for different body panels of a 4WD, it is within the scope of this invention to provide different protective plates 11 for different models of 4WD.

The labrum like protrusions 13 of the edges 14 of the protective plates 11 removes edges from the outer surface of the 4WD. This removes the risk of branches or other obstructions catching edges 14 and pulling the protective plates 11 off.

When the 4WD is returned to the urban environment, the protective plates 11 are removed and stored for later use.

Modifications and variations such as would be apparent to the skilled addressee are considered to fall within the scope of the present invention as defined by the appended claims. The present invention is not to be limited in scope by any of the specific embodiments described herein. These embodiments are intended for the purpose of exemplification only. Functionally equivalent products, formulations and methods are clearly within the scope of the invention as described by the appended claims.

Reference to positional descriptions, such as lower and upper, are to be taken in context of the embodiments depicted in the figures, and are not to be taken as limiting the invention to the literal interpretation of the term but rather as would be understood by the skilled addressee.

Throughout this specification, unless the context requires otherwise, the word *"comprise"or* variations such as *"comprises"* or *"comprising",* will be understood to imply the inclusion of a stated integer or group of integers but not the exclusion of any other integer or group of integers.

## Claims

1. A hard protective plate (11) adapted to engage a vehicle body panel (25); **characterized in that** an inner surface (12) of the hard protective plate (11) is shaped to conform exactly to the vehicle body panel (25) so that the hard protective plate (11) abuts and is of the same shape as the vehicle body panel (25), the shape of the hard protective plate (11) being such that the inner surface (12) is arranged to receive the vehicle body panel (25) so that the entire vehicle body panel (25) is covered by the hard protective plate (11);
wherein the hard protective plate (11) includes a magnet (15) to releasably secure the hard protective plate (11) to the vehicle body panel (25);
wherein the hard protective plate (11) is adapted to remain fixed to the vehicle body panel (25) when the vehicle is driven in an off-road environment;
wherein the magnet (15) is arranged to sit within a recess (22) of the inner surface (12); and
wherein the recess (22) is shaped to match the profile of the magnet (15).

2. The hard protective plate (11) as claimed in Claim 1, wherein the external body panel is selected from one of the following:
a front quarter body panel;
a rear quarter body panel;
a front door panel;
a rear door panel;
a bonnet panel; and
a rear panel.

3. The hard protective plate (11) as claimed in Claim 1 or 2, wherein the hard protective plate is made of thermoformed plastic.

4. The hard protective plate (11) as claimed in any one of Claims 1 to 3, wherein the vehicle is an off-road vehicle.

5. The hard protective plate (11) as claimed in any one of the preceding claims, wherein the vehicle is a 4WD.

6. The hard protective plate (11) as claimed in any one of the preceding claims, wherein the magnet (15) is a neodymium magnet.

7. The hard protective plate (11) as claimed in any one of the preceding claims, wherein the magnet (15) is coated with a soft material.

8. The hard protective plate (11) as claimed in any one of the preceding claims, including a plate edge (14), wherein the plate edge (14) protrudes transverse to the surface of the hard protective plate (11).

9. A method of protecting the surface of 4WD body panels when being driven in an off-road environment, including attaching a panel hard protective plate (11) as claimed in any one of the preceding claims, against a corresponding 4WD body panel (25), so that an inner surface (12) of the hard protective plate (11) abuts against and conforms to an outer surface of the 4WD body panel (25) so that the hard protective plate (11) abuts and is of the same shape as the 4WD body panel (25), the shape of the hard protective plate (11) being such that it is arranged to receive the 4WD body panel (25) and so that the entire outer surface of the 4WD body panel (25) is covered by the hard protective plate (11) to form an outer surface of the 4WD.

## Patentansprüche

1. Harte Schutzplatte (11), die dazu ausgelegt ist, ein Fahrzeugkarosseriebauteil (25) in Eingriff zu nehmen;
**dadurch gekennzeichnet, dass** eine Innenfläche (12) der harten Schutzplatte (11) so geformt ist, dass sie sich exakt dem Fahrzeugkarosseriebauteil (25) anpasst, so dass die harte Schutzplatte (11) an das Fahrzeugkarosseriebauteil (25) anstößt und dieselbe Form wie dieses aufweist, wobei die Form der harten Schutzplatte (11) derart ist, dass die Innenfläche (12) so angeordnet ist, dass sie das Fahrzeugkarosseriebauteil (25) aufnimmt, so dass das gesamte Fahrzeugkarosseriebauteil (25) von der harten Schutzplatte (11) bedeckt ist;
wobei die harte Schutzplatte (11) einen Magneten (15) beinhaltet, um die harte Schutzplatte (11) lösbar am Fahrzeugkarosseriebauteil (25) zu fixieren;
wobei die harte Schutzplatte (11) dazu ausgelegt ist, fest an dem Fahrzeugkarosseriebauteil (25) zu bleiben, wenn das Fahrzeug in einer Geländeumgebung gefahren wird;
wobei der Magnet (15) so angeordnet ist, dass er innerhalb einer Vertiefung (22) der Innenfläche (12) sitzt; und
wobei die Vertiefung (22) so geformt ist, dass sie zu dem Profil des Magneten (15) passt.

2. Harte Schutzplatte (11) nach Anspruch 1, wobei das äußere Karosseriebauteil aus einem der Folgenden ausgewählt ist:
ein Karosseriebauteil des vorderen Viertels;
ein Karosseriebauteil des hinteren Viertels;
ein vorderes Türbauteil;
ein hinteres Türbauteil;
ein Motorhaubenbauteil; und
ein Heckbauteil.

3. Harte Schutzplatte (11) nach Anspruch 1 oder 2, wobei die harte Schutzplatte aus warmgeformtem Kunststoff hergestellt ist.

4. Harte Schutzplatte (11) nach einem der Ansprüche 1 bis 3, wobei das Fahrzeug ein Geländefahrzeug ist.

5. Harte Schutzplatte (11) nach einem der vorstehenden Ansprüche, wobei das Fahrzeug ein Fahrzeug mit Allradantrieb ist.

6. Harte Schutzplatte (11) nach einem der vorstehenden Ansprüche, wobei der Magnet (15) ein Neodym-Magnet ist.

7. Harte Schutzplatte (11) nach einem der vorstehenden Ansprüche, wobei der Magnet (15) mit einem weichen Material beschichtet ist.

8. Harte Schutzplatte (11) nach einem der vorstehenden Ansprüche, beinhaltend eine Plattenkante (14), wobei die Plattenkante (14) quer zur Oberfläche der harten Schutzplatte (11) vorragt.

9. Verfahren zum Schützen der Oberfläche eines Karosseriebauteils eines Fahrzeugs mit Allradantrieb, wenn es in einer Geländeumgebung gefahren wird, beinhaltend das Anbringen einer harten Bauteilschutzplatte (11) nach einem der vorstehenden Ansprüche gegen ein entsprechendes Karosseriebauteil (25) des Fahrzeugs mit Allradantrieb, so dass eine Innenfläche (12) der harten Schutzplatte (11) gegen eine Außenfläche des Karosseriebauteils (25) des Fahrzeugs mit Allradantrieb stößt und sich dieser anpasst, so dass die harte Schutzplatte (11) gegen das Karosseriebauteil (25) des Fahrzeugs mit Allradantrieb stößt und dieselbe Form wie dieses aufweist, wobei die Form der harten Schutzplatte (11) derart ist, dass sie so angeordnet ist, dass sie das Karosseriebauteil (25) des Fahrzeugs mit Allradantrieb aufnimmt, und derart, dass die gesamte Außenfläche des Karosseriebauteils (25) des Fahrzeugs mit Allradantrieb von der harten Schutzplatte (11) so bedeckt ist, dass sie eine Außenfläche des Fahrzeugs mit Allradantrieb bildet.

## Revendications

1. Plaque protectrice dure (11) conçue pour venir en prise avec un panneau de carrosserie de véhicule (25) ;
**caractérisée en ce qu'**une surface intérieure (12) de la plaque protectrice dure (11) est formée pour s'adapter exactement au panneau de carrosserie de véhicule (25) de sorte que la plaque protectrice dure (11) vient en butée contre et a la même forme que le panneau de carrosserie de véhicule (25), la forme de la plaque protectrice dure (11) étant telle que la surface intérieure (12) est agencée pour recevoir le panneau de carrosserie de véhicule (25) de sorte que l'ensemble du panneau de carrosserie de véhicule (25) est recouvert par la plaque protectrice dure (11) ;
dans laquelle la plaque protectrice dure (11) comporte un aimant (15) pour fixer de manière amovible la plaque protectrice dure (11) au panneau de carrosserie de véhicule (25) ;
dans laquelle la plaque protectrice dure (11) est conçue pour rester fixée au panneau de carrosserie de véhicule (25) lorsque le véhicule est conduit dans un environnement tout-terrain ;
dans laquelle l'aimant (15) est agencé pour se situer à l'intérieur d'un évidement (22) de la surface intérieure (12) ; et
dans laquelle l'évidement (22) est formé pour correspondre au profil de l'aimant (15).

2. Plaque protectrice dure (11) selon la revendication 1, dans laquelle le panneau de carrosserie externe est choisi parmi l'un des éléments suivants :
un panneau de carrosserie de custode avant ;
un panneau de carrosserie de custode arrière ;
un panneau de porte avant ;
un panneau de porte arrière;
un panneau de capot ; et
un panneau arrière.

3. Plaque protectrice dure (11) selon la revendication 1 ou 2, dans laquelle la plaque protectrice dure est en plastique thermoformé.

4. Plaque protectrice dure (11) selon l'une quelconque des revendications 1 à 3, dans laquelle le véhicule est un véhicule tout-terrain.

5. Plaque protectrice dure (11) selon l'une quelconque des revendications précédentes, dans laquelle le véhicule est un 4x4.

6. Plaque protectrice dure (11) selon l'une quelconque des revendications précédentes, dans laquelle l'aimant (15) est un aimant en néodyme.

7. Plaque protectrice dure (11) selon l'une quelconque des revendications précédentes, dans laquelle l'aimant (15) est recouvert d'un matériau souple.

8. Plaque protectrice dure (11) selon l'une quelconque des revendications précédentes, comportant un bord de plaque (14), dans laquelle le bord de plaque (14) fait saillie transversalement à la surface de la plaque protectrice dure (11) .

9. Procédé de protection de la surface de panneaux de carrosserie de 4x4 lorsqu'il est conduit dans un environnement tout-terrain, comportant la fixation d'une plaque protectrice dure de panneau (11) selon l'une quelconque des revendications précédentes, contre un panneau de carrosserie de 4x4 correspondant (25), de sorte qu'une surface intérieure (12) de la plaque protectrice dure (11) vient en butée contre et s'adapte à une surface extérieure du panneau de carrosserie de 4x4 (25) de sorte que la plaque protectrice dure (11) vient en butée contre et a la même forme que le panneau de carrosserie de 4x4 (25), la forme de la plaque protectrice dure (11) étant telle qu'elle est agencée pour recevoir le panneau de carrosserie de 4x4 (25) et de sorte que toute la surface extérieure du panneau de carrosserie de 4x4 (25) est recouverte par la plaque protectrice dure (11) pour former une surface extérieure du 4x4.
